# EUROPÄISCHE PATENTSCHRIFT

(11) **EP 3 331 643 B1**
(45) Veröffentlichungstag und Bekanntmachung des Hinweises auf die Patenterteilung: **15.07.2026**
(21) Anmeldenummer: 16750765.6
(22) Anmeldetag: 05.08.2016
(51) Int. Cl.: B01J 19/00, B01J 19/24, B01J 4/00

(54) **STRÖMUNGSELEMENT MIT INTEGRIERTER KAPILLARLEITUNG ZUR ÜBERFÜHRUNG VON FLUIDEN**
FLOW ELEMENT WITH INTEGRATED CAPILLARY FOR TRANSFERRING FLUIDS
ÉLEMENT DE CONTRÔLE DE DÉBIT COMPRENANT UNE CONDUITE CAPILLAIRE DESTINEE AU TRANSFERT DE FLUIDES

(30) Priorität: 06.08.2015 EP 15180046
(43) Veröffentlichungstag der Anmeldung: 13.06.2018
(73) Patentinhaber: hte GmbH the high throughput experimentation company, 69123 Heidelberg (DE)
(72) Erfinder: BRENNER, Armin, 68723 Schwetzingen (DE); KOECHEL, Oliver, 67308 Bubenheim (DE); KEIM, Sebastian, 68542 Heddesheim (DE); GUELLICH, Frank, 69207 Sandhausen (DE); BRASCHKAT, Joerg, 69221 Dossenheim (DE)
(74) Vertreter: BASF IP Association
(86) Internationale Anmeldenummer: PCT/EP2016/068722
(87) Internationale Veröffentlichungsnummer: WO 2017/021524

(56) Entgegenhaltungen:
- DE-A1- 102008 032 098
- US-A1- 2008 181 829
- US-A1- 2008 267 844
- US-A1- 2010 098 594
- US-A1- 2011 108 132
- US-B1- 8 006 367

## Beschreibung

Die vorliegende Erfindung betrifft ein Strömungselement zur Überführung von Fluiden, das eine Kapillarkassette (1) mit integrierter Kapillarleitung (3) aufweist.

In einer parallelen Anordnung von Strömungselementen, die bevorzugt ist, wird das Strömungselement als Verteilersystem für Fluide verwendet.

Vorzugsweise wird das Strömungselement beziehungsweise das Verteilersystem in Apparaturen zur Testung von Katalysatoren eingesetzt, insbesondere zur Testung in parallel angeordneten Reaktoren.

Die Parallelreaktorapparaturen sind ein zentrales Instrument der Hochdurchsatzforschung auf dem Gebiet der heterogenen Katalyse, da diese es ermöglichen, großtechnische Prozesse im Labormaßstab nachzubilden. Die Weiterentwicklung und Verbesserung der Parallelreaktoren ist von großem technischem Interesse, da hierdurch die Entwicklung von neuen Katalysatoren und die Verbesserung von katalytischen Prozessen beschleunigt werden.

Die Genauigkeit der Simulation von katalytischen Prozessen hängt von einer Vielzahl von Parametern ab, wobei hierfür gerade das Handhaben von Fluiden, d.h. Gasen und Flüssigkeiten, von Bedeutung ist. Das erfindungsgemäße Strömungselement bewirkt insbesondere eine verbesserte Zu- respektive Abführung von Eduktfluidströmen, beziehungsweise Produktfluidströmen.

Parallelreaktorapparaturen weisen zumindest zwei parallel angeordnete Reaktoren auf. Unter einem Reaktor im Sinne der vorliegenden Erfindung ist ein Element zu verstehen, welches einen Reaktionsraum bereitstellt, in dem ein oder mehrere Eduktfluide vorbestimmten physikalischen oder chemischen Bedingungen ausgesetzt werden, um dadurch zur Reaktion zu gelangen. Beispielsweise - ohne Anspruch auf Vollständigkeit - seien die Vereinigung zweier Fluide, die thermische Behandlung oder auch die kombinierte thermische Behandlung vereinigter Fluide genannt. Vorzugsweise handelt es sich bei den genannten Reaktoren um Rohrreaktoren.

Aus dem Stand der Technik ist es bekannt, dass Fluide dem Reaktor über ein oder mehrere Verteilersysteme zu- respektive abgeführt werden können.

Das Verteilersystem respektive die Verteilersysteme sind vorzugsweise mit Elementen ausgestattet, die den Fluss drosseln, und die bei gegebenem Fluss eine Druckdifferenz in der versorgenden Leitung bewirken. Je nach Ausgestaltung und Anordnung des den Fluss drosselnden Elements kann die Druckdifferenz einen Wert annehmen, der im Bereich zwischen 1 und 200 bar liegt. Aus dem Stand der Technik sind Bauelemente bekannt, die eine drosselnde Wirkung aufweisen und die in Verbindung mit Apparaturen zur Untersuchung von Katalysatoren eingesetzt werden. Kapillaren sind besonders bevorzugte Drosselelemente.

Fluidverteilersysteme auf der Basis von Kapillaren gehören zum Stand der Technik, insbesondere im Hinblick auf eine Gleichaufteilung von Gasströmen. Beispielhaft hierfür ist das US-Patent US 2,583,177 der Firma Universal Oil Products aus Chicago zu nennen.

In der US 7,854,902 B1 werden von der Firma Nano Tek verschiedene mikrofluidische Reaktorkartuschen beschrieben und beansprucht. Als mikrofluidische Reaktorkartusche wird auch eine mikrofluidische Reaktorkartusche offenbart, die mit gewickelten Kapillarleitungen ausgestattet ist. Die Kartusche stellt einen Reaktor dar, in dem Reaktionen durchgeführt werden

Die Verwendung von Mikrokanälen und Kapillaren zur Flussregulierung ist prinzipiell bekannt. So offenbart die EP 1 297 889 A von der Firma Symyx Reaktoren zur parallelen Optimierung des Prozessflusses auf der Basis von Mikrokanälen. In der EP 1 297 889 A werden Flussverteilungssysteme beschrieben, in denen Flussrestriktoren mit unterschiedlichen Restriktionswiderständen parallel geschaltet sind. Die Restriktoren können eingestellt werden, wodurch der Fluss eingestellt werden kann.

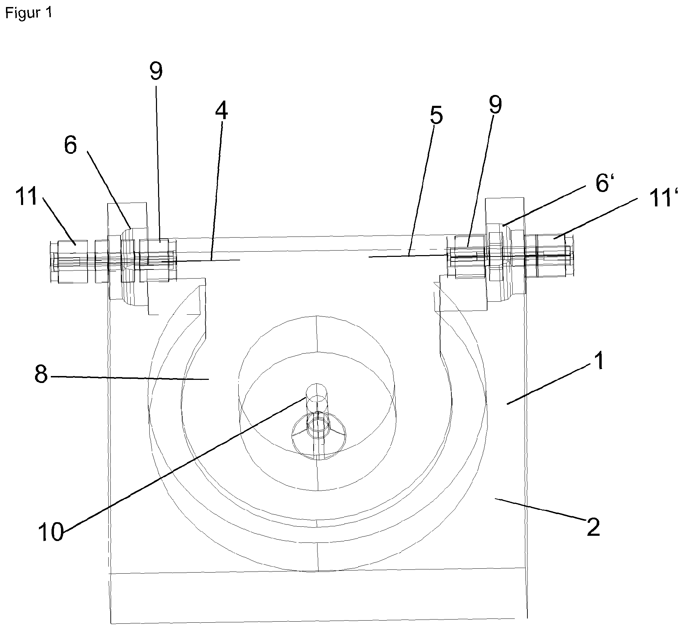

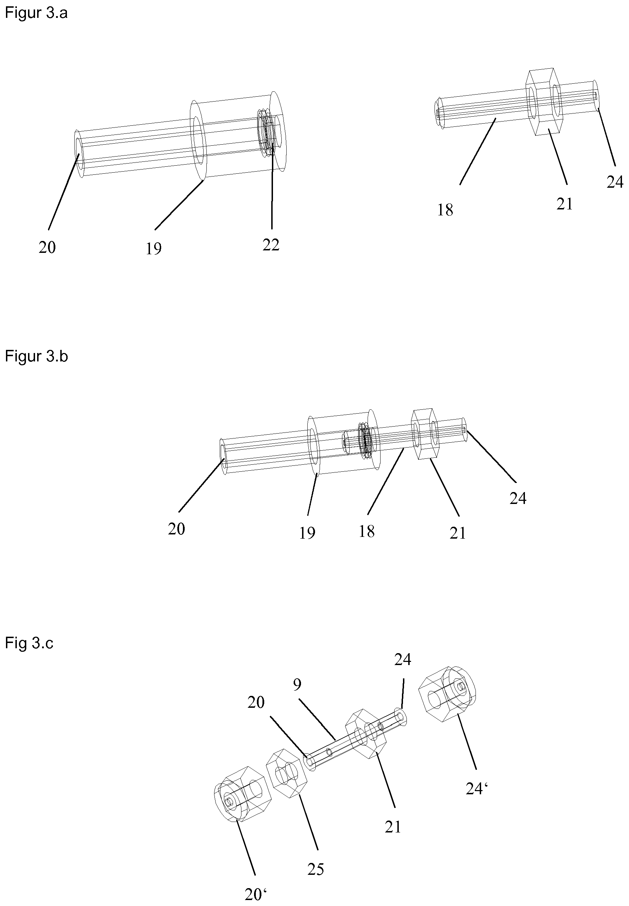

In der WO 2010/003661 A1 werden Teststände mit steuerbaren oder regelbaren Restriktoren offenbart. Die WO 2010/003661 A1 offenbart das Steuern und Regeln der durch die Restriktoren hindurchströmenden Fluide durch die Temperierung der Kapillarleitungen. In Figur 3 der PCT-Anmeldung WO 2010/003661 A1 ist ein Modul mit mehreren parallel angeordneten Kapillaren offenbart. In Figur 1 der PCT-Anmeldung WO 2010/003661 A1 werden unterschiedliche Strömungselemente gezeigt

US2008/181829 offenbart Kapillarkassetten mit einem Kapillarrohr.

Die vorliegende Erfindung betrifft Kapillarleitungen. Vorteile der vorliegenden Erfindung sind, dass die Handhabbarkeit und die Wirksamkeit von Drosselkapillaren signifikant gegenüber solchen Bauelementen verbessert werden, die aus dem Stand der Technik bekannt sind. Die Gleichverteilung und die zeitliche Konstanz der Flusswiderstände stellen beim Betrieb der Parallelreaktorapparaturen einen wesentlichen Faktor für die Güte der erzeugten Messdaten dar.

In der PCT/EP2009/004945 wird beschrieben, dass sich eine starre thermische Kopplung von Drosselkapillaren sowie eine umgebende thermische Isolation günstig auf die Verteilung der Fluide bei katalytischen Experimenten auswirkt. Im Wesentlichen besteht der Effekt darin, dass die Kapillaren im Verhältnis zueinander gleichmäßig temperiert werden und dass thermische Störeinflüsse, die beispielsweise auf einen Temperaturgradienten im beheizenden Ofen zurückzuführen sind, von den Kapillaren ferngehalten werden.

Als fluidische Widerstände werden häufig Kapillarleitungen verwendet. Der Begriff Kapillarleitung im Sinne der vorliegenden Erfindung bezieht sich auf rohrförmige Anordnungen, vorzugweise Rohre mit einem kreisförmigen Querschnitt. Der innere Durchmesser der Kapillarleitungen liegt in einem Bereich von 10 - 1000 µm, vorzugsweise in einem Bereich von 20 bis 250 µm, und der äußere Durchmesser liegt in einem Bereich von 150 bis 3000 µm.

Die Länge der Kapillarleitungen, die in Verbindung mit dem erfindungsgemäßen Strömungselement eingesetzt werden, liegt im Bereich von 0,1 - 50 m, vorzugsweise von 0,5 - 10 m, weiter vorzugsweise 1 - 10 m.

Die Kapillarleitungen liegen erfindungsgemäß in gewickelter Form vor, damit diese eine gute Handhabbarkeit aufweisen und platzsparend in technischen Apparaturen, vorzugsweise als Fluidverteilungselemente in Parallelreaktorapparaturen, eingesetzt werden können.

Die Materialbeschaffenheit der Kapillarleitung hängt von der konkreten technischen Anwendung und den dabei herrschenden Bedingungen ab und ist ansonsten nicht limitiert. In einer bevorzugten Ausführungsform enthalten Kapillarleitungen Edelstahllegierungen, beispielsweise werden Eisen- oder Nickelbasislegierungen verwendet oder andere Legierungen, die ähnliche Eigenschaften aufweisen. Darüber hinaus ist es auch bevorzugt, dass die Kapillarleitungen auf Quarzglas oder Glas basieren. Bevorzugt ist es, dass Kapillarleitungen aus Quarz oder Glas mit einem Schutzüberzug aus Polymer versehen werden, um dadurch deren mechanische Stabilität zu verbessern.

Keramische Kapillarleitungen, die beispielsweise aus Quarz oder Glas bestehen, weisen nur eine geringe mechanische Stabilität auf. Durch geringe mechanische Beanspruchung kann eine keramische Kapillarleitung brechen wohingegen in den Metallkapillaren Knicke entstehen können. Durch Knicke und Leitungsdeformationen kommt es zu einer unkontrollierten Veränderung Strömungswiderstands

Im Bereich der GC-Analysentechnik werden oftmals vergleichsweise lange Kapillarleitungen als gaschromatorgraphische Trennsäulen eingesetzt. Die Längen dieser Kapillarleitungen liegen im Bereich von 1 bis 100 m. Um die Handhabbarkeit der Kapillarleitungen zu gewährleisten, werden diese im aufgewickelten Zustand in der Form von aufgerollten Säulen in den Öfen der Gaschromatographen eingesetzt. Diese aufgewickelten Säulen werden auch als "Kapillarwickel" bezeichnet.

Es wurde gefunden, dass es vorteilhaft ist, den Kapillarwickel zu fixieren. Auf diese Weise wird der Radius der Windungen respektive bei mehrgängiger Wicklung der Kapillare die Verteilung der Radien konstant gehalten.

Aus dem Stand der Technik ist es bekannt, dass sich der Strömungswiderstand einer gebogenen Leitung gegenüber einer gestreckten Leitung aufgrund der Biegung vergrößert.

Durch die Biegung der Leitung erfährt das durchströmende Fluid an der dem Zentrum der Biegung näherliegenden Rohrseite eine Verzögerung gegenüber der dem Zentrum der Biegung abgewandten Rohrseite. Dadurch wird in der Leitung ein Wirbel erzeugt, der eine scheinbare Verkleinerung des Rohrquerschnitts bewirkt. Dieser Effekt wird durch die "Dean- Zahl" gekennzeichnet. Eine Ableitung findet sich z.B. in dem Lehrbuch "Strömung und Druckverlust", Walter Wagner, S.94 Vogel Fachbuch 5. Aufl. Dieser Effekt (der als "Deaneffekt" bezeichnet wird) bewirkt vor allem bei laminar durchströmten Rohren dass der Strömungswiderstand mit abnehmendem Biegeradius zunimmt. Am stärksten ausgeprägt tritt der Deaneffekt bei einer Reynoldszahl RE ≅ 2000 in Erscheinung. Hier steigt der Strömungswiderstand um 40% zwischen gerader Kapillare (*r* → ∞) und einer mit r = 2 cm aufgewickelten Kapillare.

In Experimenten hat sich ferner gezeigt, dass Feeds, in denen feinste Partikel verteilt sind dazu neigen, Kapillarröhrchen zu verstopfen. Dabei bildet sich vor allem in Bereich der Einströmung in die Kapillaren ein Pfropfen. Diese kann gegebenenfalls durch umgekehrtes Spülen der Kapillarröhrchen beseitigt werden, in anderen Fällen ist es erforderlich ein kurzes Stück der Kapillarleitung zu entfernen. In jedem Fall ist es erforderlich, die Kapillarleitungen aus der Anlage auszubauen.

Eine der erfindungsgemäßen Aufgaben ist es, die Handhabung von Fluiden in Parallelreaktorapparaturen zu verbessern. Insbesondere sollten verbesserte Parallelreaktorapparaturen bereitgestellt werden, die im Laborbereich zur Simulation von katalytischen Prozessen eingesetzt werden können und zumindest einen der oben genannten Nachteile vermeiden oder mindern.

Die hier genannten Aufgaben und weitere Aufgaben, werden dadurch gelöst, dass ein Strömungselement zur Überführung von Fluiden bereitgestellt wird, das eine Kapillarkassette (1) und eine gewickelte Kapillarleitung (3) aufweist,
wobei die Kapillarkassette einen ringförmigen Kanal (8) und Befestigungselemente enthält, wobei das Strömungselement dadurch gekennzeichnet ist, dass die gewickelte Kapillarleitung (3) in dem ringförmigen Kanal (8) angeordnet ist, die Enden der Kapillarleitung (3) mit je einem Verbindungselement (9). Die Verbindungselemente (9) sind mittels zwei oder mehr Befestigungselementen zumindest formschlüssig und / oder kraftschlüssig fixiert. Gemäß der Erfindung sind die Befestigungselemente in Form von Befestigungsnuten (6,6') ausgestaltet. Vorzugsweise sind die Übergangsstücke zumindest formschlüssig fixiert.

Das Verbindungselement (9) ist entweder nicht trennbar oder trennbar ausgeführt. Die nicht trennbare Ausführungsform ist beispielsweise anhand einer Schottverschraubung und in Fig.3.c illustriert. Die trennbare Variante ist im Sinn einer Steckkupplung ausgeführt. Diese Variante ist beispielsweise in Fig.3.a/3.b gezeigt. In beiden Ausführungsformen sind mittels der Verdrehsicherung (21) Maßnahmen beziehungsweise Elemente vorgesehen, die es verhindern, dass durch die Wirkung von äußeren Kräften auf die Verbindungselemente (9) Bewegungen auf die Kapillarleitung (3) übertragen werden. In einer vorteilhaften Ausgestaltung ist die Kapillarkassette (1) als eine feste Baugruppe ausgestaltet.

Der erfindungsgemäße Aufbau gewährleistet eine Stabilisierung der Kapillarleitung (3) in der Kapillarkassette (1), wodurch die Kapillarleitungen (3) besser gegenüber mechanischer Beschädigung gesichert werden. Darüber hinaus wird der Ein- und Ausbau der Strömungselemente in technischen Apparaturen gegenüber dem Ein- und Ausbau von Kapillarleitungen vereinfacht. Die Handhabbarkeit von in den Kassetten (1) angeordneten Kapillarleitungen (3) ist besser und einfacher als die Handhabung von Kapillarwicklungen, die aus dem Stand der Technik bekannt sind. In einer besonders vorteilhaften Ausführungsform ist die Kapillarleitung (3) vollständig in das Strömungselement integriert, wobei das Strömungselement einen einheitlichen Block bildet, der die Kapillarleitung (3) vor mechanischer Beschädigungen schützt.

Eine Kapillarkassette im Sinne der vorliegenden Erfindung umfasstein Modul, enthaltend zumindest eine Kapillare beziehungsweise Kapillarleitung (3) sowie zumindest ein Gehäuse. Somit bezieht sich der Begriff Kapillarkassette auf ein Modul mit zumindest einer Kapillare (3) sowie zumindest einem Gehäuse. Ferner sind in das Modul mindestens zwei Elemente integriert, die es ermöglichen die Kapillare (3) mit den zu- respektive abführenden Leitungen zu verbinden, wobei insbesondere Bewegungen und Krafteinwirkungen auf die in dem Modul liegenden Kapillaren von diesen ferngehalten werden. Das Modul kann als Ganzes beziehungsweise als Einheit getauscht werden. Bei den zu- und abführenden Leitungen handelt es sich um die Leitungen eine Apparatur mit parallel angeordneten Reaktoren, die zur Untersuchung von Katalysatoren oder zur Prozessoptimierung verwendet wird. Der Einbau der Strömungselemente in diesen Parallelreaktorapparaturen ist besonders einfach und daher vorteilhaft. Die Fixierung des Strömungselements mit zu- und abführenden Leitungen bedeutet, dass eine fluidische Verbindung mit dem Verbindungselement (9) beziehungsweise den Verbindungselementen (9) hergestellt wird. Die zu- und abführenden Leitungen weisen einen Leitungsinnendurchmesser von 1 - 10 mm, vorzugsweise von 1,5 - 5 mm. Der Innendurchmesser der zuführenden und abführenden Leitungen ist größer ist als der Leitungsdurchmesser der Kapillarleitungen selber. Die Fixierung des Strömungselements mit zuführenden und abführenden Leitungen bedeutet auch, dass die Fixierung fluiddicht ist. Somit sind zwischen dem äußeren Verbindungslement (11, 11') und den daran anzubringenden zu- und abführenden Leitungen auch Dichtmittel vorhanden.

In einer bevorzugten Ausführungsform ist der Kapillarkassette (1) des erfindungsgemäßen Strömungselements dadurch gekennzeichnet ist, dass die Befestigungsnuten (6, 6') mit einer eckigen ausgestalteten Verdrehsicherung (21) an den Verbindungselementen (9) eine formschlüssige Verbindung bilden. Vorzugsweise wird durch diese Fixierung eine Limitierung der Drehbarkeit um die Längsachse des Verbindungselements (9) in der Befestigungsnut (6, 6') bewirkt, wobei die Drehbarkeit der Längsachse durch einen Rotationswinkel von ≤ 20 °, vorzugsweise von ≤ 10 ° und insbesondere vorzugsweise von ≤ 5 ° gekennzeichnet ist. Die Limitierung der Drehbarkeit ist besonders vorteilhaft, da hierdurch eine mechanische Beschädigung der Kapillarleitungen (3) verhindert oder minimiert wird. Der Querschnitt der Befestigungsnuten ist vorzugsweise dadurch gekennzeichnet, dass er nicht kreisrund ist. Vorzugsweise weist der Querschnitt zumindest drei Ecken, also einen dreieckigen, viereckigen, fünfeckigen, sechseckigen Querschnitt auf beziehungsweise auch einen Querschnitt, der mehr als sechs Ecken aufweist.

Vorzugsweise sind die Verbindungselemente (9) auch kraftschlüssig über die Befestigungsnuten (6, 6') mit der Kapillarkassette (1) verbunden. Hierzu dient beispielhaft die in Fig. 3.cdargestellte Mutter (25). Durch dieses Bauelementwird die Drehbarkeit der Verbindungselemente (9) zum einen eingeschränkt, zum anderen werden alle anderen Freiheitsgrade der Bewegungen, die außerhalb der Symmetrieachse des Verbindungselements (9) liegen, bezüglich der Kapillarkassette unterbunden. Die Verbindungselemente (9) ermöglichen einen einfachen Einbau und Ausbau der Kapillarleitungen (3) in der Kassette (1).

Erfindungsgemäß handelt es sich bei der Verbindung von der Innenseite des Verbindungselements (9) und dem Ende der Kapillarleitung (4, 5) um eine Schraubverbindung.

Die Schraubverbindung ist mit einer Kompressionsdichtung ausgestattet.

In einer bevorzugten Ausführungsform des Strömungselements ist das Verbindungselement (9) trennbar im Sinn eines Steckkupplungssystems, wie in Fig. 3.a bzw. Fig. 3.b gezeigt, ausgebildet Vorzugsweise befinden sich die Steckteile (18) des Kupplungssystems an einer Außenseite der Kapillarkassette (1). Korrespondierend zu den Steckteilen (18) befinden sich vorzugsweise in der Vorderwand (17) des umschließenden Gehäuses passende Kupplungskörper (19). In einer vorteilhaften Ausführung sindSteckteile (18) und Kupplungskörper (19) in einer austauschbaren Anordnung aufgebaut.

Vorzugsweise ist das erfindungsgemäße Strömungselement derart ausgestaltet, dass sich die Verbindungselemente (9) an unterschiedlichen Seiten der Kapillarkassette (1) befinden, vorzugsweise an gegenüberliegenden Seiten der Kapillarkassette (1).

In einer bevorzugten Ausführungsform des Strömungselements ist der Kapillarkanal (8) mit einer wärmeleitenden Gießmasse befüllt. Dadurch wird die thermische Kopplung an die Kapillarkassette (1) verbessert. Als ein weiterer Vorteil der Befüllung mit der wärmeleitenden Gießmasse ist die Fixierung der Kapillarleitung (3) zu nennen.

In einer weiteren Ausführungsform des erfindungsgemäßen Strömungselements enthält die Kapillarkassette (1) ein Material, das gute wärmeleitende Eigenschaften aufweist.

Vorzugsweise ist das Material der Kapillarkassette (1) ein Metall, welches zumindest ein Metall aus der Gruppe Kupfer, Aluminium, Messing umfasst. Die Wärmeleitung ist von Bedeutung, um die Kapillarleitungen (3) zu temperieren. Die Strömungselemente können in Öfen angeordnet werden und mittels der Öfen auf gewünschte Zieltemperaturen temperiert werden. Die homogene Temperierung der Kapillarkassetten (1) und der darin angeordneten Kapillarleitungen (3) ist für das Einstellen der Strömungseigenschaften der Fluide von großer Bedeutung.

Im Hinblick auf die Dimensionierung des erfindungsgemäßen Strömungselements ist bevorzugt, dass die Kapillarkassette (1) eine Grundfläche aufweist, die im Bereich von 10 bis 400 cm² liegt, vorzugsweise im Bereich von 20 bis 200 cm², die Breite der Kapillarkassette (1) liegt dabei vorzugsweise im Bereich 0,5 - 6 cm, vorzugsweise im Bereich von 1 - 4 cm. Die beiden Grundflächen eines einzelnen Strömungselements sind vorzugsweise parallel angeordnet, wodurch die Verbindung von einzelnen Kapillarkassetten (1) zu Kapillarkassettenstapeln (1-1, 1-2, 1-3,...) möglich ist.

In einer besonders vorteilhaften Ausführungsform des erfindungsgemäßen Strömungselements, bildet eine Seite der Grundfläche des Strömungselements auch die Einführungsöffnung der Kapillarleitung (1) in den Kanal (8). Weiter bevorzugt ist es dabei auch, dass die gleiche Seite der Grundfläche die Einführungsöffnung für die Verbindungselemente (9) bildet. Bei den Einführungsöffnungen kann es sich beispielsweise um die Nuten für die Verbindungselemente (6, 6') und somit um die Befestigungsnuten (6, 6') handeln. Durch die hier dargestellte Ausführungsform ist auch der Zusammenbau des Strömungselements vorteilhaft. Das zusammengesetzte Strömungselement stellt ein sehr kompaktes Bauteil dar, das besonders vorteilhaft als Fluidströmungselement in Apparaturen eingesetzt werden kann. Somit bezieht sich ein Aspekt der Erfindung auf die vorteilhafte Handhabbarkeit des Strömungselements, was sowohl den Zusammenbau des Strömungselements betrifft, jedoch auch die Positionierung und Fixierung des Strömungselements als Fluidströmungslement in Reaktionsapparaturen, die mit parallel angeordneten Reaktoren ausgestattet sind und die zur Untersuchung von Katalysatoren. Die in den Reaktionsapparaturen angeordneten Reaktoren werden zur Untersuchung von Feststoffkatalysatoren und oder Prozessoptimierung verwendet.

Die in der Kapillarkassette (1) angeordnete Kapillarleitung (3) weist vorzugsweise eine Länge im Bereich von 0,1 - 50 m auf, vorzugsweise 0,5- 10 m, weiter vorzugsweise 1 - 10 m.

In einer bevorzugten Ausführungsform weist die Kapillarkassette (1) zumindest eine Abdeckung auf.

In einer weiteren Ausführungsform, die auch bevorzugt ist, betrifft die Erfindung ein Verteilersystem, das aus einer Pluralität von Strömungselementen besteht, wobei die Strömungselemente vorzugsweise stapelförmig angeordnet sind.

Weiter bevorzugt ist ein Verteilersystem, bei dem die Pluralität von Strömungselementen in einem Gehäuse (12, 13, 14, 15, 17) enthalten ist, wobei das Gehäuse mit einer Vorrichtung zum Beheizen und / oder Kühlen der Strömungselemente ausgestattet ist. Dieses Gehäuse wird ebenfalls gemäß oben genannter Darstellung aus einem gut wärmeleitenden Material hergestellt. Eine große Wärmeleitung in Verbindung mit einer großen Wärmekapazität wirkt sich günstig auf den Ausgleich von Temperaturtransienten aus. Eine große Wärmeleitung in Verbindung mit einer großen Wärmekapazität wird in diesem Zusammenhang beispielhaft durch 0,5 kg Aluminium erreicht.

Weiter bevorzugt ist eine Ausführungsform des Verteilersystems, bei der die einzelnen Strömungselemente thermisch im Wesentlichen voneinander entkoppelt sind. Vorzugsweise weist dabei jedes Strömungselement zumindest Mittel zum Beheizen und/oder Kühlen auf, vorzugsweise jeweils pro Modul/Kapillarkassette (1) ein eigenes Mittel zum Beheizen und/oder Kühlen, vorzugsweise ein Mittel zum Beheizen

In einer bevorzugten Ausführungsform ist das die Strömungselemente umschließende Gehäuse, welches mit der Vorrichtung zum Beheizen und/oder Kühlen ausgestattet ist, auch von einer Isolierung umgeben.

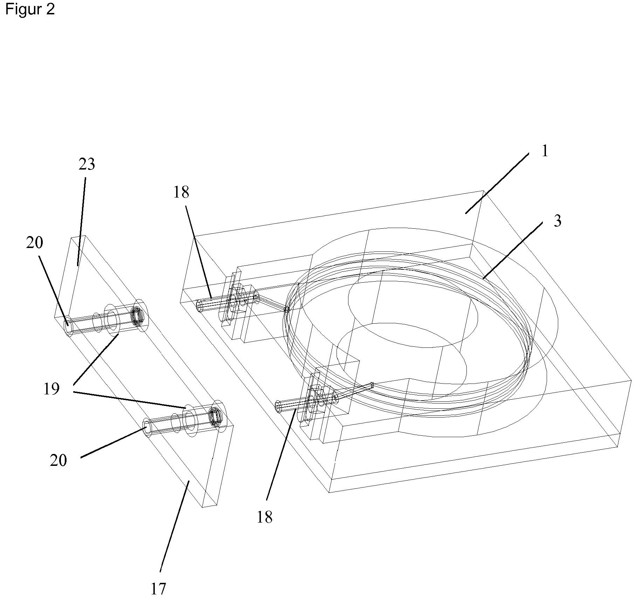

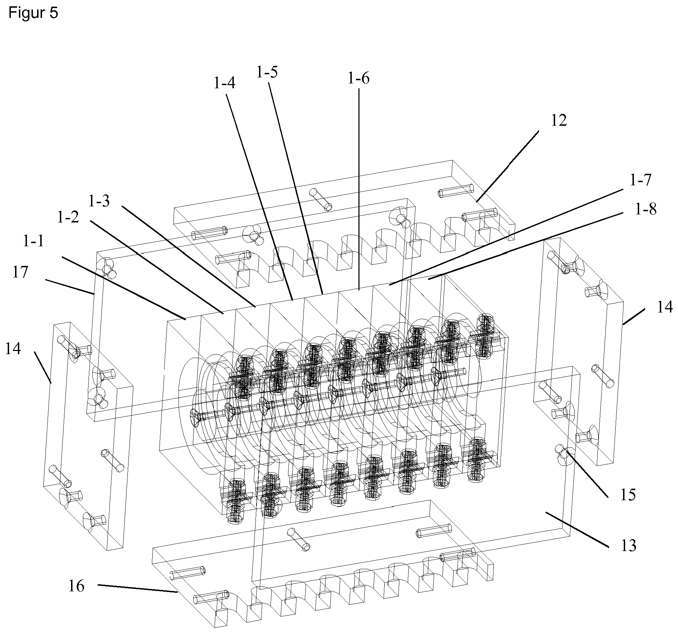

In einer bevorzugten Ausführungsform nimmt das Gehäuse Teile eines dichtenden fluidischen Kupplungssystems auf, deren Gegenstücke sich an einer Seite des Grundkörpers der Kapillarkassette (1) befinden. Siehe hierzu Figur 2. Das Kupplungssystem ist derart ausgestaltet, dass fluidische Kopplung der Kapillarkassette mit dem umschließenden Gehäuse, beispielsweise nur durch das Einschieben der Kapillarkassette in das umschließende Gehäuse, hergestellt werden kann. In diesem Fall sind Maßnahmen vorzusehen, dass die Kupplungen durch den fluidischen Druck nicht auseinander gedrückt werden. Hierzu kann beispielsweise der Deckel (14) des umschließenden Gehäuses dienen, welcher in Figur 5 gezeigt wird. Geeignet sind auch andere formschlüssige Mittel. Ein Beispiel für ein formschlüssiges Mittel wird anhand von Figur 5 verdeutlicht, wobei in Figur 5 ein Stift durch die Abdeckung (13) eingeschoben wird. Der entnehmbare Stift, der beispielsweise in eine Ausnehmung des Grundkörpers eingreifen kann, ist in der Figur 5 nicht eingezeichnet. Wenn die Abdeckung (13) hinreichend groß ist, d.h. die von den Kupplungen gegenüberliegende Kante überragt, so ist es ebenfalls bevorzugt, dass der Stift an der den Kupplungen gegenüberliegenden Seite eingreift. Darüber hinaus sollen ebenfalls kraftschlüssige Mittel, wie beispielsweise das Festpressen mit einer Spindel, erfindungsgemäß eingeschlossen sein.

In einer weiter bevorzugten Ausführungsform befinden sich die Kupplungen an zwei gegenüberliegenden Seiten. Dies entspricht der Ausführungsform wie in Figur 1 gezeigt. In diesem Fall werden Maßnahmen getroffen, die verhindern, dass sich die trennbaren Verbindungselemente (9) unter dem in ihrem Inneren herrschenden Druck lösen. Dazu ist bevorzugt, dass die trennbaren Verbindungselemente (9) selbst einen Verriegelungsmechanismus enthalten. Des Weiteren ist bevorzugt, dass Kupplungen ohne einen Verriegelungsmechanismus in einer umgebenden Struktur angeordnet werden, die die entstehenden Kräfte aufnimmt und die ein Lösen der Kupplungen erlaubt.

In einer weiteren bevorzugten Ausführungsform befinden sich die Verbindungselemente (9) an benachbarten Flächen des Grundkörpers (2) der Kapillarkassette (1). Hierin ist eine Kombination der beiden zuvor beschriebenen Anordnungen zu sehen, und es sind somit die in den beiden vorhergehenden Abschnitten genannten Maßnahmen zur Dichtung und zur mechanischen Sicherung zu implementieren.

Vorzugsweise werden die erfindungsgemäßen Strömungselemente in einer Ausführungsform, als Verteilersystem angeordnet. Das Verteilersystem stellt einen weiteren Aspekt der Erfindung dar.

Das Strömungselement beziehungsweise das Verteilersystem werden vorzugsweise in Parallelreaktorapparaturen eingesetzt. Durch die Verwendung des erfindungsgemäßen Strömungselements und des Verteilersystems ergeben sich technische Vorteile, was die Handhabbarkeit der Bauelemente angeht und was die Genauigkeit der Datenqualität betrifft. Weiter vorteilhaft ist es, dass die hierbei eingesetzten Strömungselemente eine Kalibrierung aufweisen, die bereits vor dem Einbau in die Apparatur ermittelt wird.

Das erfindungsgemäße Verteilersystem gewährleistet eine genaue Temperierung der Kapillarleitungen (3), die in den einzelnen Strömungselementen angeordnet sind.

Hierdurch können thermische Effekte besser kontrolliert werden, als dies mit anderen Temperierungsmitteln und Anordnungen aus dem Stand der Technik erreicht wird. Durch die bessere Kontrolle der Fluidströmungsbedingungen wird auch eine bessere Genauigkeit bei den Katalysedaten erzielt.

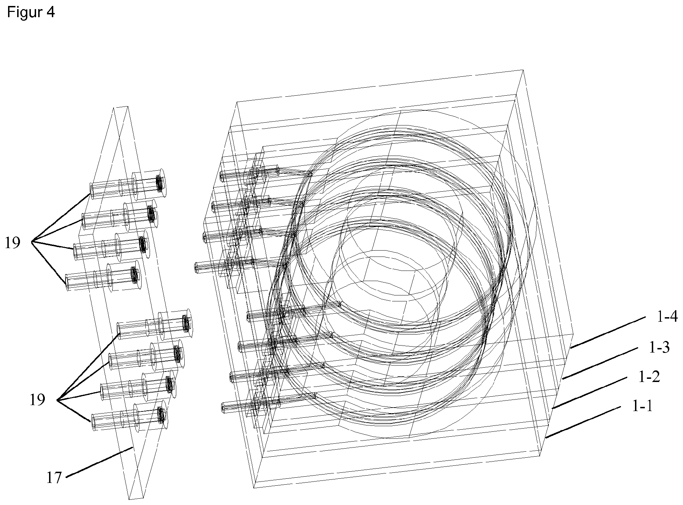

Somit ist eine Ausführungsform bevorzugt, in der die erfindungsgemäßen Kapillarkassetten in einer Parallelreaktorapparatur als Verteilersystem für Fluide angeordnet sind. Die Handhabbarkeit der Kapillarkassetten wird durch die erfindungsgemäße Ausgestaltung und die Anordnung innerhalb der Parallelreaktorapparatur wesentlich verbessert. Als besonderer Vorteil der bevorzugten Ausführungsform ist zu nennen, dass sich die Kapillarkassetten, die gruppenweise parallel angeordnet sind, jeweils einzeln austauschen lassen. Die entsprechende Situation ist in der Figur 4 ohne ein umschließendes Gehäuse gezeigt. Insbesondere ist es auch bevorzugt, dass der Austausch der einzelnen Kapillarkassetten während des Betriebs der Parallelreaktorapparatur durchgeführt werden kann. Die Ausführungsform ist beispielhaft in Figur 2 für eine einzelne Kapillarkassette illustriert. In dieser Ausführungsform sind die Leitungen zu den Kupplungen der Kapillarkassetten mit Absperrventilen oder die Kupplungen selbst mit Sperrelementen (selbstsperrenden Kupplungen) versehen. Durch diese Elemente wird der unkontrollierte Austritt von Fluidströmen während des Austauschs der einzelnen Kapillarkassetten verhindert. Bei den Kapillarkassetten, die sich während des Betriebs der Apparatur austauschen lassen, liegen die Kupplungen jeweils auf der gleichen Seite der Kassette. Die Wartungsarbeit an Parallelreaktorapparaturen kann unter Verwendung der erfindungsgemäßen Kapillarkassetten wesentlich verbessert werden. Es ist besonders bevorzugt, dass der Austausch der Strömungselemente während des Betriebs der Anlage absolviert werden kann, da die Reaktoren und die darin befindlichen Katalysatoren auf einer Betriebstemperatur gelagert werden können. Wartungszeiten und Ausfallzeiten beim Betrieb von Apparaturen mit parallel angeordneten können hierdurch in effizienter Weise verkürzt werden.

Ein umschließendes Gehäuse, ähnlich wie in Figur 5 gezeigt, sorgt neben der weiteren Angleichung von Temperaturgradienten, für die räumliche Stabilisierung der Kapillarkassetten und damit der Aufnahme der durch den fluidischen Druck auf die Kupplungen entstehenden Kräfte. Die Kräfte sind derart gerichtet, dass sie die geteilten Verbindungselemente auseinander treiben. Entsprechende lösbare Fixierungen, die immer nur auf jeweils eine Kapillarkassette wirken, sind Formschlüssige oder kraftschlüssige Verbindungen zwischen zumindest einem Teil des Gehäuses und jeweils einer Kassette.

### Beispielhafte Ausführungsformen des erfindungsgemäßen Strömungselements

Die Figuren 1 bis 5 dienen dazu, die erfindungsgemäßen Strömungselemente beziehungsweise einzelne Aspekte der erfindungsgemäßen Strömungselemente oder auch des Verteilersystems zu illustrieren. Durch diese Darstellungen soll die vorliegende Erfindung jedoch in keiner Weise eingeschränkt werden.

In einer beispielhaften Ausführungsform, die bevorzugt ist, umfasst die Kapillarkassette (1) zur Aufnahme der Kapillarleitung (1) einen Metallblock. Die Abmessungen der Kapillarkassette (1) in diesem Beispiel betragen 10 x10 x 20 cm. Es handelt sich hier beispielhaft um eine Kassette (1) mit einer quadratischen Grundfläche. Die Grundfläche ist von einem ringförmigen Kanal (8) durchzogen, wobei der Kanal (8) so ausgestaltet, dass dieser sich für Aufnahme einer Kapillarleitung (3) eignet. Darüber hinaus weist die Kapillarkassette auch Befestigungsnuten (6, 6') auf, die zur Aufnahme von Verbindungselementen (9) dienen. Die Verbindungselemente (9) können in einer speziellen Ausgestaltungsform als sogenannte Schottverschraubungen ausgestaltet sein. Schottverschraubungen stellt ein rohrförmiges Verbindungselement dar, wobei sich auf der die Außenseite des rohrförmigen Grundkörpers ein Gewinde befindet und innen Maßnahmen vorgesehen sind, die eine fluidische Verbindung erlauben. An den jeweiligen Enden des rohrförmigen Grundkörpers werden jeweils Kompressionsverschraubungen angebracht, mit denen die zu- bzw. abführenden Leitungen befestigt und fluidisch mit dem Grundkörper und somit miteinander verbunden werden. Ferner befindet sich etwa in der Mitte des Grundkörpers eine Verdrehsicherung. Diese ist typischerweise Quadratisch oder regelmäßig sechseckig ausgeführt, wobei sich der zylindrische Grundkörper im Zentrum der Verdrehsicherung befindet und mit diesem unlösbar verbunden ist. Weiterhin kann nach Entfernen einer der Kompressionsverschraubungen eine Mutter aufgedreht werden, sodass die Verdrehsicherung gegen den Rand einer Bohrung gepresst werden kann. Hierdurch wird die Formschlüssige Wirkung der Verdrehsicherung durch eine kraftschlüssige Wirkung unterstützt. Insbesondere werden die Kassetten (1) mit trennbarem und mit nicht trennbarem Verbindungselement (9) bevorzugt.

Diese Aufnahmen für die Verbindungselemente (9) können, wie in Figur 1 oder 2 gezeigt, an gegenüberliegenden Seiten angeordnet liegen. In einer weiteren bevorzugten Ausführungsform liegen die Verbindungselemente (9) auf einer Seite, weiterhin wird bevorzugt, dass die Übergänge auf benachbarten Seiten liegen. In jedem der Fälle sind die Übergänge so angeordnet, dass diese verdrehsicher sind. Verdrehsicher bedeutet, dass das Steckteil (18) oder der Kupplungskörper (19) durch formschlüssige Maßnahmen, vorzugsweise eine Verdrehsicherung (21), so mit dem Gehäuse verbunden sind, dass sich der Grundkörper höchstens um 30° / 20° / 10° bezüglich Kapillarkassette (1) verdrehen kann. Diese Maßnahme zum Formschluss dient dazu, dass weder die außen abgehenden Zuleitungen durch die Montage der innen liegenden Kapillaren (3) verdreht werden, noch das durch die Montage der äußeren Zuleitungen die innen liegende Kapillare (3) verdreht wird.

Der Begriff "Befestigungsmittel" im Sinne der vorliegenden Erfindung bezieht sich auf Mittel, mit denen a) die Kapillarkassette (1) verschlossen wird, beispielsweise wird mit einem Befestigungsmittel die Abdeckung befestigt, b) der Formschluss beispielsweise des Verbindungselements (9) in der Nut unterstützt wird.

In dem Fall, in welchem die Erfindung in der Form eines einzelnen Strömungselements verwendet wird, wird die Kapillarkassette (1) mit einer Abdeckung beziehungsweise einem Deckel versehen. Die Abdeckung kann beispielsweise mit Schrauben, Federn, Klammern befestigt werden. Der Deckel ist in Figur 1 teilweise sichtbar. Unter anderem bewirkt die Abdeckung auch, dass die Kapillarleitung (3) innerhalb des ringförmigen Kanals (8) der Kapillarkassette gehalten wird. Ferner hat die Abdeckung die Aufgabe, dass Zugerscheinungen, und damit störende thermische Einflüsse, von der Kapillare (3) ferngehalten werden.

### Gehäuse

Wird die Erfindung in bevorzugter Ausführung eines Verteilersystems mit einer Pluralität von Strömungselementen realisiert, so ist es vorteilhalft, die einzelnen Strömungselemente stapelförmig anzuordnen, da stapelförmig angeordnete Strömungselemente besonders vorteilhaft in einem Gehäuse untergebracht werden können beziehungsweise das Gehäuse vorteilhaft um die Strömungselemente herum angeordnet werden kann.

Eine Explosionsansicht dieser Anordnung ist in Figur 4 gezeigt. Die flachen Grundflächen bieten den Vorteil, dass die eine Grundfläche als Deckel bzw. Abdeckung für die benachbarte Kapillarkassette dienen kann.

Vorteilshafterweise umfassen die Kapillarkassetten ein Material, das gute wärmeleitende Eigenschaften aufweist. Es handelt sich beispielsweise um Materialien aus der Gruppe Kupfer, Aluminium oder Messing. Bevorzugt sind diejenige Materialien, deren Wärmeleitfähigkeit größer oder gleich 100 W m⁻¹ K⁻¹ ist, weiter vorzugsweise ist die Wärmeleitfähigkeit größer gleich 400 W m⁻¹ K⁻¹.

Bezüglich der Materialstärke des Gehäuses ist es bevorzugt, dass dieses eine Materialstärke von > 5 mm, weiter vorzugsweise > 10 mm und darüber hinaus bevorzugt größer 20 mm, aufweisen sollte.

Ein Vorteil der bevorzugten Materialstärke ist, dass hierdurch die Homogenisierung des Temperaturfelds verbessert wird. Ein sehr homogenes Temperaturfeld ermöglicht, dass der Innenraum gleichmäßig temperiert wird.

In einer weiteren Ausführungsform, die auch bevorzugt ist, wird das Verteilersystem, das mit Gehäuse umschlossen ist, in einem Ofen angeordnet. Beispielsweise handelt es sich hierbei um einen Umluftofen. Durch die gezielte Temperierung der Strömungselemente ist es möglich, die Viskosität der in den Kapillaren (3) geführten Fluide derart anzupassen, dass der für das Experiment erforderlich Druckabfall über die aufgewickelte Kapillare (3) entsteht. Zu berücksichtigen ist, dass die Viskosität von Gasen mit der Temperatur zunimmt, wohingegen die Viskosität von Flüssigkeiten sinkt.

### Heizen/Kühlen

In einer weiteren Ausführungsform wird Gehäuse, das das Verteilersystem umschließt, mit einer eigenen Beheizung versehen. Diese Beheizung kann beispielsweise durch Flächenheizkörper, Heizfolien oder auch durch Kanäle, welche mit einer Wärmeträgerflüssigkeit durchströmt werden, erfolgen.

Auf der äußeren Oberfläche des umschließenden Gehäuses können Mittel zum Kühlen angebracht werden. Bevorzugt sind fluidisch durchströmte Wärmetauscher, die fluidische Durchströmung kann jedoch auch dadurch erreicht werden, dass die Gehäuseteile direkt Bohrungen für Fluide enthalten. Weiterhin wird bevorzugt, dass in das Gehäuse Kanäle eingearbeitet werden, in die Rohre für Fluide eingepresst werden. Darüber hinaus werden Kühlelemente auf der Basis des Seebeck-Effekts (Peltier-Kühlelemente) bevorzugt.

Eine gezielte Kühlung ist auch eine Maßnahme zur Anpassung der Viskosität der durch die Kapillarleitungen durchgeleiteten Fluide an die experimentellen Erfordernisse.

In dem Fall, dass die genaue Einstellung der Viskosität auf einen definierten Wert und damit die Einhaltung einer speziellen Temperatur keine entscheidende Rolle spielt, sondern es nur auf möglichst große Gleichheit der Strömungswiderstände untereinander ankommt, ist eine Heizung oder Kühlung nicht erforderlich. In diesem Fall genügt es das umfassende Gehäuse auf der Außenseite mit einer thermischen Isolation zu versehen.

Der Wärmedurchgangskoeffizient der Wärmeisolation sollte dabei vorzugsweise unter 1 W m⁻¹ K⁻¹ liegen.

### Wärmeleitende, härtende Masse

In genauen Messungen zum Leitwert der aufgewickelten Kapillarleitungen (3) hat es sich gezeigt, dass sowohl eine räumliche Lage der Kapillaren also der Wickelradius als auch ein konstanter Wärmefluss in die Kapillaren (3) wichtig für die Konstanz der Strömungswiderstände ist. Die räumliche Lage der Windungen, der gewickelten Kapillarleitungen (3), kann durch das Ausgießen des Umlaufenden Kanals mit einer wärmeleitenden, härtenden Masse fixiert werden. Besonders hat sich in diesem Zusammenhang die Verwendung von Silikongießmassen bewährt, insbesondere von Silikongießmassen mit einer signifikanten Wärmeleitfähigkeit. Auf jeden Fall liegt die Wärmleitfähigkeit dieser Massen um 1 bis 2 Größenordnungen über der Leitfähigkeit von, der Luft oder der, Leitfähigkeit, wie diese durch die Berührung der Kapillarleitungen (3) mit der Kapillarkassette (1) bewirkt wird.

Bevorzugt wird eine Ausführungsform, in der die Kapillarkassetten (1) einzeln temperiert und gegeneinander thermisch entkoppelt werden. Temperieren soll sowohl Maßnahmen zum Erhöhen der Temperatur über die umgebende Temperatur umfassen als auch Maßnahmen zum Senken unter die umgebende Temperatur. Vorteilhaft werden die einzelnen Temperierungseinrichtungen mit Maßnahmen beziehungweise Elemente zu Konstanthaltung der Temperatur, Temperaturreglern, ausgestattet.

Weiterhin ist es bevorzugt, dass die Kapillarleitungen (3) nach der Abnutzung innerhalb der Strömungselemente ausgetauscht werden können, so dass es möglich ist, die Kassetten (1) mit neuen Kapillarleitungen (3) zu bestücken und dann wiederzuverwenden.

Darüber hinaus können die Anschlussleitungen im Außenbereich auch mit Bajonettverschlüssen versehen sein, wodurch ein schnelles Anschließen und Abtrennen von den Versorgungsleitungen ermöglicht wird.

### Kurze Beschreibung der Figuren:

- Figur 1: zeigt eine schematische Darstellung des erfindungsgemäßen Strömungselementes, das ohne Kapillarleitung (3) bestückt ist; in der gezeigten Ausführungsform liegen die zwei Verbindungselement (9) an den gegenüberliegenden Seiten in einer Achse. Als Verbindungselemente (9) sind Schottverschraubungen entsprechend Fig.3.c dargestellt.
- Figur 2: zeigt eine schematische Darstellung Strömungselements, bei dem die Verbindungselemente (9) auf der gleichen Seite der Kapillarkassette (1) angeordnet sind. Die Steckteile (18), die die Verbindung zu den Kupplungskörpern (19) herstellen, befinden sich in der Vorderwand (17). Von der Vorderwand (17) ist nur ein Ausschnitt gezeigt.
- Figur 3.a: zeigt eine Darstellung des Verbindungselements (9) in der Ausführungsform einer trennbaren Steckkupplung. Das Steckteil (18) und der Kupplungskörper (19) der Kupplung sind im geöffneten Zustand gezeigt.
- Figur 3.b: Wie Figur 3.a jedoch im geschlossenen Zustand.
- Figur 3.c: zeigt eine Darstellung des Verbindungselements (9) als Schottverschraubung. D.h. mit beidseitiger z.B. Kompressionsverschraubung (20' bzw. 24'). Dieses Verbindungselement ist nicht trennbar.
- Figur 4: zeigt eine schematische Darstellung eines Verteilersystems, das sich aus einer stapelförmigen Anordnung von vier Strömungselementen zusammensetzt und bei dem sämtliche Verbindungselemente (9) auf der gleichen Seite angeordnet sind. In der Verlängerung der Verbindungselemente (9) befinden sich die Kupplungskörper (19) in der Vorderwand (17). Dabei steht die Anordnung der Steckkupplungen im Vordergrund.
- Figur 5: zeigt eine schematische Darstellung eines Verteilersystems mit acht stapelförmig angeordneten Strömungselementen mit acht Kapillarkassetten (1-1 bis 1-8), die von Platten der Gehäusewand umgeben sind. Hier ist die Variante mit einzeln zu verschraubenden Kupplungen gezeigt. Diese Anordnung eignet sich auch für die Verwendung von selbsthemmenden Steckkupplungen.

### Bezugszeichenliste

- 1 -: Kapillarkassette
- 2 -: Grundkörper
- 3 -: Kapillarleitung bzw. Kapillare
- 4 -: eingangsseitiges Endstück der Kapillarleitung
- 5 -: ausgangsseitiges Endstück der Kapillarleitung
- 6, 6' -: Befestigungselement in Form von Befestigungsnut zur Aufnahme von Verbindungselement (9)
- 8 -: Kanal
- 9 -: Verbindungselement
- 10 -: Zentrum des Grundköpers
- 11, 11' -: äußeres Verbindungselement des Verbindungselements
- 12 -: Oberteil
- 13 -: Abnehmbare Rückwand
- 14 -: Seitenteil
- 15 -: Verschluss der Rückwand, als Senkkopfschraube dargestellt
- 16 -: Unterteil
- 17 -: Vorderwand
- 18 -: Steckteil der Kupplung
- 19 -: Kupplungskörper
- 20 -: äußeres Verbindungselement
- 20': äußeres Verbindungselement, Ausführungsform Kompressionsverschraubung
- 21 -: Verdrehsicherung
- 22 -: Dichtelement
- 23 -: Ausschnitt aus der Vorderwand 17
- 24 -: inneres Verbindungselement
- 24': inneresVerbindungselement, Ausführungsform Kompressionsverschraubung
- 25: Mutter zur Befestigung des Verbindungselements9
- 1-1, 1-2, ...,1- 8-: unterschiedliche Kapillarkassetten

## Patentansprüche

1. Strömungselement zur Überführung von Fluiden, das eine Kapillarkassette (1) und eine gewickelte Kapillarleitung (3) aufweist,
wobei die Kapillarkassette (1) einen ringförmigen Kanal (8) und Befestigungselemente (6, 6'), die als Befestigungsnuten (6, 6') ausgestaltet sind, aufweist,
wobei das Strömungselement **dadurch gekennzeichnet ist, dass**
die gewickelte Kapillarleitung (3) in dem ringförmigen Kanal (8) angeordnet ist,
die Enden der Kapillarleitung (4, 5) mit einer Innenseite je eines Verbindungselements (9) in Form von Schraubverbindungen mit Kompressionsdichtungen verbunden sind und die Verbindungselemente (9) mittels zwei oder mehr Befestigungselementen (6,6') formschlüssig und/oder kraftschlüssig fixiert sind.

2. Strömungselement zur Überführung von Fluiden nach Anspruch 1, **dadurch gekennzeichnet, dass** die eingangsseitige Befestigungsnut (6) und ausgangseitige Befestigungsnut (6')an unterschiedlichen Seiten der Kapillarkassette (1) angeordnet sind.

3. Strömungselement zur Überführung von Fluiden nach Anspruch 2, das **dadurch gekennzeichnet ist, dass**
die Befestigungsnuten (6, 6') die Verdrehsicherung (21) je eines Verbindungselements (9) aufnehmen, wobei die Verdrehsicherung (21) zumindest drei Ecken aufweist, so dass zumindest eine Kante der Verdrehsicherung mit einer Kante der Befestigungsnut (6, 6') parallel verläuft, wodurch die Drehbarkeit des Verbindungselements um seine Längsachse durch einen Rotationswinkel von < 20°.

4. Strömungselement zur Überführung von Fluiden nach Anspruch 1 oder nach Anspruch 2, das **dadurch gekennzeichnet ist, dass**
die Verbindungselemente (9) auch kraftschlüssig in der Befestigungsnut (6, 6') mit der Kapillarkassette (1) verbunden sind.

5. Strömungselement zur Überführung von Fluiden nach zumindest einem der Ansprüche 1 bis 3, das **dadurch gekennzeichnet ist, dass**
es sich bei der Verbindung von der Innenseite des Verbindungselements (9) und dem Ende der Kapillarleitung (4, 5) um eine Schraubverbindung handelt, wobei die Schraubverbindung vorzugsweise mit einer Kompressionsdichtung ausgestattet ist.

6. Strömungselement zur Überführung von Fluiden nach zumindest einem der Ansprüche 1 bis 4, das **dadurch gekennzeichnet ist, dass**
die Außenseite des Verbindungselements (9) mit einem Gewinde ausgestattet ist, das eine kraftschlüssige und dichtende Verbindung mit den außerhalb der Kapillarkassette (1) liegenden Leitungen ermöglicht.

7. Strömungselement zur Überführung von Fluiden nach zumindest einem der Ansprüche 1-6, das **dadurch gekennzeichnet ist, dass** das Verbindungselement zweiteilig und damit trennbar ist, wobei diese zweiteilige Gestaltung derart ist, dass ein Dichtsystem aufgenommen werden kann, welches den inneren Kanal des Verbindungselements gegenüber der Umgebung fluidisch abdichtet.

8. Strömungselement zur Überführung von Fluiden nach zumindest einem der Ansprüche 1 - 7, das **dadurch gekennzeichnet ist, dass** die Kapillarkassette (1) ein Metall aufweist, vorzugsweise eine Metall ausgewählt aus der Gruppe enthaltend Kupfer, Aluminium, Messing; wobei die Dimensionierung der Kapillarkassetten vorzugsweise dergestalt ist, dass diese eine Grundfläche aufweiset, die im Bereich von 10 bis 400 cm² liegt, wobei die Breite der Kapillarkassette vorzugsweise im Bereich 1 - 6 cm liegt; und wobei die Kapillarleitung eine Länge im Bereich von 0,1 - 50 m aufweist, vorzugsweise 0,5 - 10 m, weiter vorzugsweise 1 - 10 m.

9. Strömungselement zur Überführung von Fluiden nach zumindest einem der Ansprüche 1 - 8, das **dadurch gekennzeichnet ist, dass** die Kapillarkassette (1) zumindest eine Abdeckung aufweist und/oder dass der Raum innerhalb des Kapillarkanals (8) mit wärmeleitender Gießmasse befüllt ist.

10. Verteilersystem zur Überführung von Fluiden, das zumindest zwei, vorzugsweise zumindest vier, weiter vorzugsweise zumindest acht Strömungselemente gemäß einem der Ansprüche 1 - 9 aufweisen, wobei besagte Strömungselemente vorzugsweise stapelförmig angeordnet sind.

11. Verteilersystem zur Überführung von Fluiden nach Anspruch 10, das eine Pluralität von Strömungselementen aufweist, wobei das Verteilersystem von einem Gehäuse umfasst wird, wobei das Gehäuse vorzugsweise mit einer Vorrichtung zum Beheizen und/oder Kühlen des Verteilersystems ausgestattet ist.

12. Verteilersystem zur Überführung von Fluiden nach zumindest einem der Ansprüche 10 - 11, das eine Pluralität von Strömungselementen aufweist, wobei die einzelnen Strömungselemente thermisch voneinander entkoppelt sind, wobei, vorzugsweise jedes Strömungselement Mittel zum Beheizen und/oder Kühlen aufweist.

13. Verteilersystem zur Überführung von Fluiden nach zumindest einem der Ansprüche 10 - 12, das eine Pluralität von Strömungselementen aufweist, wobei das Gehäuse von einer Isolierung umgeben ist.

14. Verwendung von Strömungselementen zur Überführung von Fluiden gemäß zumindest eines der Ansprüche 1 - 9 in einem Verteilersystem gemäß zumindest einem der Ansprüche 10 - 13, welches in einer Reaktionsapparatur zur Untersuchung von Katalysatoren eingesetzt wird.

15. Verwendung von Strömungselementen gemäß zumindest eines der Ansprüche 1 - 9 oder Verteilersystem gemäß zumindest einem der Ansprüche 10 - 13 zur Überführung von Fluiden in Reaktionsapparaturen mit zumindest zwei parallel angeordneten Reaktoren.

## Claims

1. A flow element for the transfer of fluids comprising a capillary cassette (1) and a wound capillary line (3),
wherein the capillary cassette (1) has a ring-shaped channel (8) and fasteners (6, 6') which are designed as fastening grooves (6, 6'),
wherein the flow element is **characterized by** the fact that
the wound capillary line (3) is arranged in the annular channel (8),
the ends of the capillary cable (4, 5) are connected to an inside of each of a connecting element (9) in the form of screw connections with compression seals and the connecting elements (9) are fixed by means of two or more fastening elements (6, 6') in a form-fitting and/or force-fit manner.

2. A flow element for the transfer of fluids according to claim 1, **characterized in that** the fixing groove (6) on the input side and the fixing groove (6') on the output side are arranged on different sides of the capillary cassette (1).

3. A flow element for the transfer of fluids according to claim 2, which is **characterized in that**
the fastening grooves (6, 6') accommodate the anti-rotation device (21) of each of a connecting element (9), wherein the anti-rotation device (21) has at least three corners, so that at least one edge of the anti-rotation device runs parallel to one edge of the fastening groove (6, 6'), whereby the rotation of the connecting element around its longitudinal axis is increased by a rotation angle of ≤ 20°.

4. A flow element for the transfer of fluids according to claim 1 or claim 2, which is **characterized in that**
the connecting elements (9) are also connected to the capillary cassette (1) in a force-fit manner in the fastening groove (6, 6').

5. A flow element for the transfer of fluids according to at least one of claims 1 to 3, which is **characterized in that**
the connection from the inside of the connecting element (9) and the end of the capillary line (4, 5) is a screw connection, the screw connection preferably being equipped with a compression seal.

6. A flow element for the transfer of fluids according to at least one of claims 1 to 4, which is **characterized in that**
the outside of the connecting element (9) is equipped with a thread which allows a force-fit and sealing connection with the cables lying outside the capillary cassette (1).

7. A flow member for the transfer of fluids according to at least one of claims 1-6, which is **characterized in that** the connecting element is two-part and therefore separable, wherein this two-part design is such that a sealing system can be accommodated which fluidically seals the inner channel of the connecting element from the environment.

8. A flow member for the transfer of fluids according to at least one of claims 1-7, which is **characterized in that** the capillary cassette (1) has a metal, preferably a metal selected from the group copper, aluminum, brass; wherein the dimensioning of the capillary cassettes is preferably such that they have a base area in the range of 10 to 400 cm² where the width of the capillary cassette is preferably in the range of 1 - 6 cm; and where the capillary line has a length in the range of 0.1 - 50 m, preferably 0.5 - 10 m, further preferably 1 - 10 m.

9. A flow element for the transfer of fluids according to at least one of claims 1-8, which is **characterized in that** the capillary cassette (1) has at least one cover and/or that the space within the capillary channel (8) is filled with thermally conductive casting compound.

10. A distribution system for the transfer of fluids comprising at least two, preferably at least four, and furthermore preferably at least eight flow elements according to any one of claims 1 to 9, said flow elements preferably arranged in stacks.

11. A distribution system for the transfer of fluids according to claim 10, having a plurality of flow elements, wherein the distribution system is encompassed by a housing, the housing preferably equipped with a device for heating and/or cooling the distribution system.

12. A distribution system for the transfer of fluids according to at least one of claims 10 to 11, which has a plurality of flow elements, wherein the individual flow elements are thermally decoupled from each other, wherein preferably each flow element has means for heating and/or cooling.

13. A distribution system for the transfer of fluids according to at least one of claims 10 to 12, having a plurality of flow elements, the housing being surrounded by insulation.

14. The use of flow elements for the transfer of fluids according to at least one of claims 1 to 9 in a distribution system according to at least one of claims 10 to 13, which is used in a reaction apparatus for the investigation of catalysts.

15. Use of flow elements according to at least one of claims 1 to 9 or distribution system according to at least one of claims 10 to 13 for transferring fluids into reaction apparatus having at least two reactors arranged in parallel.

## Revendications

1. Un élément d'écoulement pour le transfert de fluides comprenant une cassette capillaire (1) et une ligne capillaire enroulée (3),
où la cassette capillaire (1) possède un canal en forme d'anneau (8) et des fixations (6, 6') conçues comme des rainures de fixation (6, 6'),
où l'élément de flux se **caractérise par le fait que**
la ligne capillaire blessée (3) est disposée dans le canal annulaire (8),
Les extrémités du câble capillaire (4, 5) sont reliées à l'intérieur de chacune d'un élément de raccordement (9) sous forme de connexions vissées avec joints de compression, et les éléments de raccordement (9) sont fixés au moyen de deux éléments de fixation ou plus (6, 6') de manière ajustée et/ou ajustée par force.

2. Un élément d'écoulement pour le transfert de fluides selon la revendication 1, **caractérisé par le fait que** la rainure de fixation (6) du côté entrée et la rainure de fixation (6') du côté sortie sont disposées de chaque côté de la cassette capillaire (1).

3. Un élément d'écoulement pour le transfert de fluides selon l'affirmation 2, **caractérisé par le fait que**
Les rainures de fixation (6, 6') accueillent le dispositif anti-rotation (21) de chaque élément de connexion (9), où le dispositif anti-rotation (21) possède au moins trois coins, de sorte qu'au moins un bord du dispositif anti-rotation court parallèlement à un bord de la rainure de fixation (6, 6'), ce qui augmente la rotation de l'élément de raccordement autour de son axe longitudinal d'un angle de rotation de ≤ 20°.

4. Un élément d'écoulement pour le transfert de fluides selon l'affirmation 1 ou la revendication 2, **caractérisé par** ce
Les éléments de connexion (9) sont également reliés à la cassette capillaire (1) de manière forcée dans la rainure de fixation (6, 6').

5. Un élément d'écoulement pour le transfert de fluides selon au moins une des revendications 1 à 3, **caractérisé par**
La connexion depuis l'intérieur de l'élément de raccordement (9) et l'extrémité de la ligne capillaire (4, 5) est une connexion à vis, la connexion par vis étant de préférence équipée d'un joint de compression.

6. Un élément d'écoulement pour le transfert de fluides selon au moins une des revendications 1 à 4, **caractérisée par** ce
L'extérieur de l'élément de connexion (9) est équipé d'un filetage permettant une connexion par ajustement et étanchéité avec les câbles situés à l'extérieur de la cassette capillaire (1).

7. Un élément d'écoulement pour le transfert de fluides selon au moins une des revendications 1 à 6, **caractérisée par le fait que** l'élément de connexion est en deux parties et donc séparable, dans laquelle cette conception en deux parties permet d'accueillir un système d'étanchéité qui scelle fluidiquement le canal intérieur de l'élément de connexion de l'environnement.

8. Un élément de flux pour le transfert de fluides selon au moins une des revendications 1 à 7, **caractérisée par le fait que** la cassette capillaire (1) possède un métal, de préférence un métal sélectionné parmi le groupe cuivre, aluminium, laiton ; où la dimension des cassettes capillaires est de préférence telle qu'elles ont une surface de base comprise entre 10 et 400 cm2 où la largeur de la cassette capillaire est de préférence comprise entre 1 et 6 cm ; et lorsque la ligne capillaire a une longueur comprise entre 0,1 et 50 m, de préférence 0,5 à 10 m, et de préférence entre 1 et 10 m.

9. Un élément d'écoulement pour le transfert de fluides selon au moins une des revendications 1 à 8, **caractérisée par le fait que** la cassette capillaire (1) possède au moins un couvercle et/ou que l'espace à l'intérieur du canal capillaire (8) est rempli d'un composé de coulée thermiquement conducteur.

10. Un système de distribution pour le transfert de fluides comprenant au moins deux, de préférence au moins quatre, et de préférence au moins huit éléments d'écoulement selon l'une des revendications 1 à 9, ces éléments étant de préférence disposés en empilements.

11. Un système de distribution pour le transfert de fluides selon la revendication 10, comportant une pluralité d'éléments d'écoulement, dans lequel le système de distribution est englobé par un boîtier, de préférence équipé d'un dispositif de chauffage et/ou de refroidissement du système de distribution.

12. Un système de distribution pour le transfert de fluides selon au moins une des revendications 10 à 11, qui comporte une pluralité d'éléments d'écoulement, dans lequel les éléments individuels d'écoulement sont thermiquement découplés les uns des autres, de préférence chaque élément d'écoulement disposant de moyens de chauffage et/ou de refroidissement.

13. Un système de distribution pour le transfert de fluides selon au moins une des revendications 10 à 12, comportant une pluralité d'éléments d'écoulement, le logement étant entouré d'isolation.

14. L'utilisation d'éléments d'écoulement pour le transfert de fluides selon au moins une des revendications 1 à 9 dans un système de distribution selon au moins une des revendications 10 à 13, utilisée dans un appareil de réaction pour l'étude des catalyseurs.

15. Utilisation d'éléments d'écoulement selon au moins une des revendications 1 à 9 ou système de distribution selon au moins une des revendications 10 à 13 pour le transfert de fluides dans des appareils de réaction comportant au moins deux réacteurs disposés en parallèle.
